# EUROPEAN PATENT SPECIFICATION

(11) **EP 0 543 451 B1**
(45) Date of publication and mention of the grant of the patent: **27.09.1995**
(21) Application number: 92203467.3
(22) Date of filing: 12.11.1992
(51) Int. Cl.: B60K 17/04, B60T 1/06

(54) **A drive axle for vehicles, particularly agricultural tractors**
Antriebsachse eines Fahrzeuges, insbesondere eines Ackerbauschleppers
Essieu moteur pour véhicule, en particulier pour tracteur agricole

(30) Priority: 22.11.1991 IT PD910217
(43) Date of publication of application: 26.05.1993
(73) Proprietor: CARRARO S.P.A., I-35011 Campodarsego (Padova) (IT)
(72) Inventor: Massaccesi, Gianni, I-35010 Vigodarzere (Padova) (IT); Carraro, Timante, I-35011 Campodarsego (Padova) (IT)
(74) Representative: Cantaluppi, Stefano

(56) References cited:
- EP-A- 272 567
- DE-A- 2 316 932
- DE-A- 3 409 100
- DE-A- 3 606 876
- FR-A- 2 112 396
- FR-A- 2 251 452
- US-A- 4 043 226
- US-A- 4 315 556
- US-A- 4 932 281

## Description

This invention relates to a drive axle for vehicles, in particular agricultural tractors, comprising a beam having a corresponding wheel hub mounted on the opposite ends thereof, each wheel hub being associated with a respective stub shaft and including:
- a stationary part attached to the beam and a part which is rotatable relative to the stationary part and rigid for rotation with the corresponding wheel; and
- an epicyclic speed reduction mechanism adapted to be fitted between the stub shaft and the turning part of the hub, said speed reduction mechanism comprising a sun gear, ring gear, and planet gear carrier whereby said sun gear is in driving connection with said ring gear, said planet gear carrier being non-rotatably attached to the stationary part of the corresponding wheel hub, in said planet gear carrier being provided at least one conduit of a braking circuit of the vehicle.

An axle having the above-outlined features is known from DE-A-3606876. Other axles with a more common structure are known from French patent applications No. 2517003 and No. 2518703.

These axles are customarily provided with an epicyclic speed reduction mechanism between the stub shaft and the turning part of the wheel hub. The reduction mechanism is mounted such that the gear carrier, sun gear, and ring gear are respectively rigid for rotation with the turning part of the hub, the corresponding stub shaft, and the stationary part of the hub. Said axles may be optionally provided with brakes, usually of the disc type. Accordingly, it becomes necessary to arrange for manufacture of the axles in two versions, one of which would have the wheel hubs equipped with brakes, as in the instance of the above-mentioned two documents, and the other without a brake system. Lastly, the brake-fitted versions require that the brakes be readily accessed for servicing in view of some parts of the brake, like the brake linings, being subject to wear and periodic replacement.

The construction of the axle according to the aforementioned documents has some deficiencies versus the above-noted technical requirements.

One of these deficiencies is attributable to that the brake operating mechanisms, including the corresponding actuator and hydraulic supply system therefor, are a comparatively complex design and, therefore, expensive to manufacture and assemble. It follows that such a structure cannot be reasonably adopted for axles without brake systems, which therefore must be designed, produced and stored separately.

Another drawback is that, also on account of the above-mentioned structural complexity, the brake cannot be readily accessed far servicing the brake linings, for example.

The underlying problem of this invention is to provide an axle structure wherein the wheel hubs can be equipped with brakes, and equally well fabricated in the brake-less version, while overcoming all of the drawbacks with which the cited prior art is beset.

This problem is solved according to the invention by an axle having the features mentioned in claim 1.

With the axle, and specifically the two wheel hubs, so configured, it becomes possible to utilise the gear carrier structure both for supporting the brake and for providing channels and whatever else is required to operate the same. Thus, the axle can be made with or without a brake system and yet involve no major design alterations or significant differences in manufacturing cost.

Further, the axle may be conveniently equipped with brakes any time after its manufacture, thereby allowing of later adaptation once assembled and storage as a single version adapted to be completed with a brake system where desired to fill specific marketing demands.

The features and advantages of this invention will be more readily apparent from the following detailed description of two preferred embodiments thereof, given by way of illustration and not of limitation with reference to the accompanying drawings, in which:
Figure 1 is a fragmentary longitudinal section view of one of the wheel hubs of an axle embodying this invention;
Figure 2 is a sectional view taken along line II-II in Figure 1 showing just the stationary part of the wheel hub of said axle;
Figure 3 is a corresponding view of the wheel hub of the axle shown in Figure 1 as incorporating a brake; and
Figure 4 is a fragmentary view in longitudinal section, corresponding to Figure 1, of an other embodiment of the invention.

In the drawing figures, generally shown at 1 is a drive/steering axle such as the steering front axle of a four-wheel drive agricultural tractor, which embodies this invention. The axle 1 comprises a box-type beam 2 having a wheel hub, generally indicated at 4, pivoted on its axially opposite ends for oscillation about respective pivot pins 3.

For each wheel hub 4, there is provided an axle shaft (not shown) supported rotatably on the beam 2 and being associated with the corresponding hub through a coupling 6 and a stub shaft 7.

Each wheel hub 4 comprises a stationary part 8, through which the hub 4 is pivoted on the beam 2, and a turning part 9 which is supported on the stationary part 8 exterior through bearings 10. The combination of the stationary 8 and turning 9 parts, together with a cap 11 fitting over the latter in sealed relationship, confine a lubricant-tight chamber 12 within the hub 4. This chamber 12 is sealed against leakage by respective ring seals 13, 14 known per se which fit between the turning part 9 and the stationary part 8, and between the latter and the stub shaft 7. Formed on the turning part 9 is a flange 15 which extends radially outwards and has captive screws 16 for attaching a wheel, not shown. Also fastened to the flange 15 by means of screws 17 is the cap 11.

The drive from the stub shaft 7 to the turning part 9 of hub 4 is accomplished through an epicyclic speed reducing mechanism including a sun gear 20, which is made integral with the stub shaft 7 by gear-cutting the same on the remote end from the coupling 6, and a ring gear 21, formed by gear-cutting the inside cylindrical surface of the turning part 9.

It is to be noted, therefore, that both the ring gear 21 and the flange 15 for connecting the wheel (or another driven part) are obtained in the unitary structure of the turning part 9. On the same part 9 are also obtained, by appropriate machining, the two tracks 10a,b of the bearings 10.

The sun and ring gears enmesh with each other through three planet gears 22, of which only one has been depicted in the drawing. Each planet gear 22 is supported via a pin 23 on a gear carrier 24 which, according to the invention, is made integral with the stationary part 8 of the hub 4 and, therefore, rotatively rigid therewith.

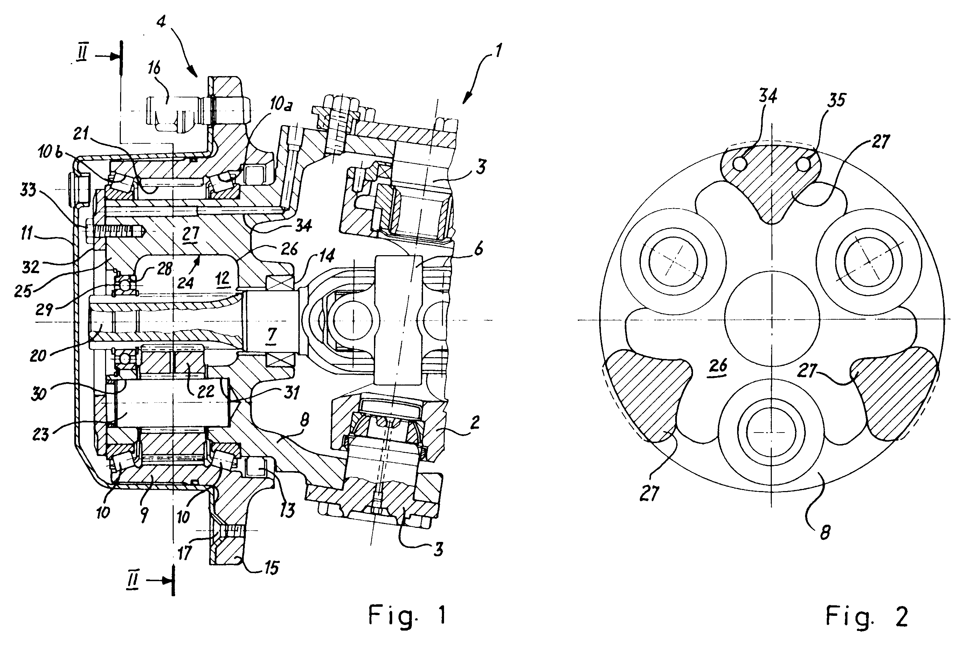

In order to have the stationary part 8 configured in the gear carrier form, it is provided with two walls 25, 26 which are set apart and interconnected by three pillar formations 27 lying parallel to the axis of the hub 4 and angularly offset 120°. These pillar formations 27 are brought out in the cross-sectional view of the stationary hub part 8 shown in Figure 2.

Wall 25 is provided with a central opening 28 receiving a bearing 29 for the sun gear 20, and three holes 30 in registry with respective holes 31 in wall 26 and adapted to receive spindles 23 for the planet gears 22. These spindles are retained in the holes 30, 31 by an annular flange 32 fastened to wall 25 by means of screws 33.

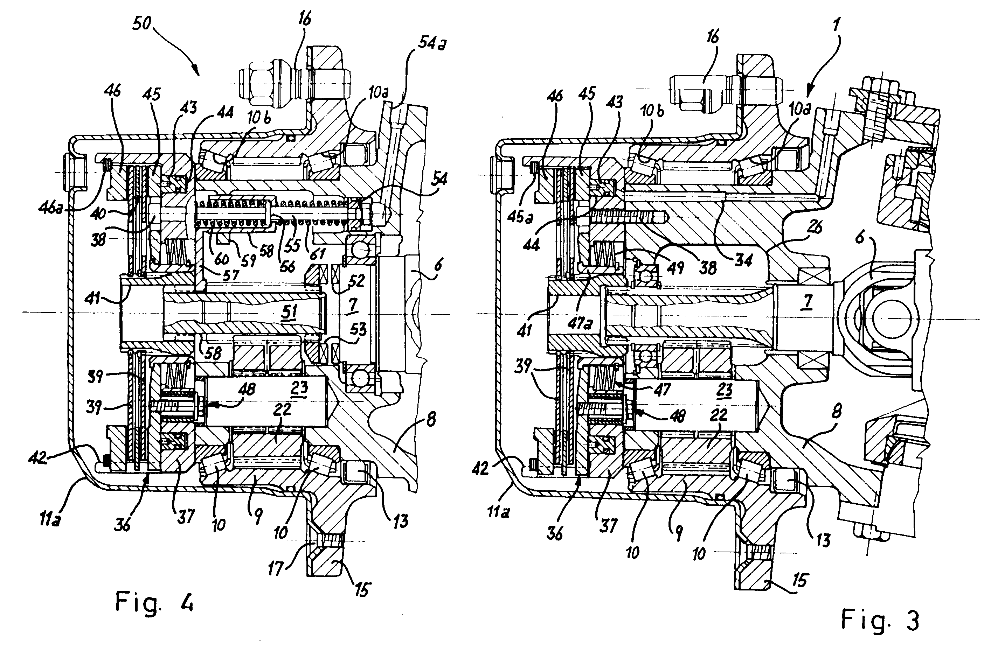

It matters to observe that said flange is also effective to shut off two conduits 34, 35 formed in the stationary part 8 of the hub through one of the pillar formations 27. These conduits, being both open to wall 25, belong to the feed circuit for a brake generally shown at 36 (Figures 3 and 4).

The axle of Figure 1 can be conveniently equipped with a brake 36 for each hub. For this purpose, the cap 11 and annular flange 32 only should be removed, and the latter replaced with a pre-assembled brake unit 36, thereafter the cap 11 is replaced with another cap 11a which differ from the former by its dimensions being adapted to accommodate said brake 36 additionally to the turning part of the hub.

The brake comprises a bell-shaped piece 37 made rigid with the stationary part 8 of hub 4 by means of screws 38, and a package of discs 39 and counter-discs 40 which are respectively rigid for rotation with the sun gear 20 of the epicyclic speed reducer through a coupling sleeve 41, and with the bell-shaped piece 37, which is purposely provided with a splined skirt 42. Said brake 36 further comprises a hydraulic actuator having an annular piston 43 tightly slidable within an annular seat 44 in the bell-shaped piece, a pair of pressure plates 45, 46 embracing said disc 39 and counter-disc 40 package, an elastic return mechanism 47 including a Belleville washer package 49 active between the bell-shaped piece 37 and the plate 45 via a tubular link 47a, to return the plate to a home position, and a plurality of devices 48 for taking up the backlash between the discs and counter-discs. The latter are of a type disclosed in European Patent Application No. 90122311.5 by this same Applicant.

When the brake 36 is mounted against the wall 25 of the gear carrier 24, the annular seat 44 for the piston 43 is put in fluid communication with the conduits 34, 35 to operate the actuator through a suitable medium, such as a pressurised oil, and respectively bleed off any air present in the brake system.

By supplying oil under a pressure to the actuator of brake 36, the disc and counter-disc package 39, 40 is compressed between the pressure plates 45, 46 clamped, in turn, between the piston 43 and a stop ring 46a provided on the bell-shaped piece 37.

Shown in Figure 4 is a variation, generally denoted by 50, of the axle according to the previously described embodiment which is specially conceived for use on agricultural tractors capable of attaining relatively high top speeds. Similar or equivalent parts of the axle 1 are denoted by the same reference numerals.

In the axle 50, located between the sun gear 51 of the epicyclic reducer and the coupling 6 is a face dog clutch including first and second clutch members 52, 53 which are respectively keyed to that portion of the stub shaft 7 which is fast with the coupling 6, and the corresponding end of the sun gear 51. The clutch 52, 53 is selectively actuatable by axially sliding the sun gear 51 to make the sun gear and coupling rotatively rigid with each other whenever the speed of the vehicle equipped with axle 50 is a relatively slow one, and release the sun gear from the coupling on predetermined speed values being exceeded. A piston actuator 54 is provided for the purpose which is fed through a conduit 54a and has a piston rod 55 carrying a flange 56 on an intermediate portion thereof. The actuator has a forked working arm 57 engaging in a groove 58 on the sun gear 51, thereby the latter is allowed to rotate relative to said arm 57, but made rigid for translation therewith. This arm 57 extends square from a sleeve body 58 guided on the stationary part 8 of hub 4 at the location of a drilled bracket 59. The body 58 is, in turn, fitted over the piston rod 55 and abuts against the flange 56. Two bias springs 60, 61 extend respectively between the bell-shaped piece 37 of the brake 36 and the flange 56, and between the piston 54 and the sleeve body 58. The function served by such springs 60, 61 is one of transforming the piston 54 movement, resulting from operation of the same through a suitable medium such as a pressurised oil, into an elastic load tending to urge the sun gear 52 to slide relative to the sleeve 41 and the planet gears 22 and thereby mutually engage, or respectively disengage, the clutch members 52, 53. In this way, operation of the clutch members, especially under load, can be made easier.

It should be further noted that, even with the clutch disengaged to uncouple the reducer from the corresponding axle shaft, the operability of the brake 36 would be still retained by the braking action, which applies between the stationary part of hub 4 (with which the brake bell-shaped piece is rigid) and the sun gear (with which the sleeve coupling 41 is rotatively fast), being transferred to the turning part of the hub through the planet gears 22.

Among the principal advantages afforded by the invention is that it enables the brake to be located on the hub exterior, where it is easier to reach for inspection and servicing. Also, the axle can be supplied with or without brakes, and in the latter case fitted with brakes at some later time with a greatly simplified operation. In addition, pre-arranging the axle to accommodate a brake system would not affect its production cost significantly.

Lastly, an ability to disengage the reducer from its corresponding axle shaft is provided while travelling on the road at high speed, while still ensuring a braking function for the hub, since the turning part of the latter would remain connected drivingly with the sun gear through the planet gears, even with the reducer disengaged.

## Claims

1. A drive axle for vehicles, in particular agricultural tractors, comprising a beam (2) having a corresponding wheel hub (4) mounted on the opposite ends thereof, each wheel hub (4) being associated with a respective stub shaft (7) and including:
- a stationary part (8) attached to the beam (2), and a part (9) which is rotatable relative to the stationary part (8) and rigid for rotation with the corresponding wheel; and
- an epicyclic speed reduction mechanism (20-24) adapted to be fitted between the stub shaft (7) and the turning part of the hub (4), said speed reduction mechanism comprising a sun gear (20), ring gear (21), and planet gear carrier (24) whereby said sun gear (20) is in driving connection with said ring gear (21), said planet gear carrier (24) being non-rotatably attached to the stationary part (8) of the corresponding wheel hub (4), in said planet gear carrier (24) being provided at least one conduit (34,35) of a braking circuit of the vehicle, characterized in that said conduit (34,35) is open through a wall (25) of said planet gear carrier (24) axially remote from said beam (2), said wall (25) of the planet gear carrier (24) being provided for removably connecting thereto either a closure (32) for closing said conduit (34,35) or a stationary part (37) of a brake (36), said brake having a brake hydraulic actuator (43,44) which is hydraulically connected to said at least one conduit (34,35) when the brake is mounted to said planet gear carrier wall (25).

2. An axle according to claim 1, wherein the brake (36) comprises a disc (39) and counter-disc package (40), with the ones being rigid for rotation with a bell-shaped piece of the stationary part of the brake (37), and the others rigid for rotation with the sun gear (20) of said speed reducing mechanism, said bell-shaped piece (37) forming in combination with said actuator (43) and said disc (39) and counter-disc package (40) an individually handled unit associated with said gear carrier (24).

3. An axle according to either Claim 1 or 2, wherein the planet gear carrier (24) comprises a plurality of pillar formations (27) extending between respective walls of said stationary part (8) of the hub, with said conduit (34,35) extending through said pillar formations (27).

4. An axle according to Claim 2, wherein those members of said package (39) which are rigid for rotation with said sun gear are made rigid for rotation with a sleeve (41) which is made releasably rigid for rotation with the sun gear (20), at a free end thereof.

5. An axle according to one or more of the preceding claims, wherein there is provided, between said sun gear (20) and the corresponding stub shaft (7), a clutch means (52,53) adapted to be selectively operated to connect, and respectively disconnect, said speed reducing mechanism drivingly to/from said stub shaft (7).

6. An axle according to Claim 5, wherein the clutch means comprises first and second clutch members (54,53) on the facing ends of said stub shaft (7) and said sun gear (51), and an actuator (54) active on said sun gear (51) to shift it axially within said speed reducing mechanism into and out of an engaged condition of said members.

7. An axle according to Claim 6, wherein said actuator (54) is active on said sun gear (51) through at least one elastic element (60,61) for elastically urging said sun gear (51) into and out of said engaged condition.

8. An axle according to one or more of the preceding claims, in which said rotatable part (9) has a unitary structure including means for connection to the corresponding wheel and the ring gear (21) of the epicyclic speed reduction mechanism.

9. An axle according to Claim 8, in which respective tracks (10a,b) for bearings (10) intended for supporting said rotatable part (9) on said stationary part (8) are obtained in the unitary structure of said rotatable part (9).

## Patentansprüche

1. Antriebswelle für Fahrzeuge, insbesondere landwirtschaftliche Zugmaschinen, die einen Träger (2) mit an dessen entgegengesetzten Enden befestigter Korrespondierender Radnabe (4) aufweist, wobei jede Radnabe (4) einem entsprechenden Achsschenkel (7) zugeordnet ist und enthält:
- einen an dem Träger (2) befestigten stationären Teil (8) und einen Teil (9), welcher relativ zu dem stationären Teil (8) drehbar und mit dem korrespondierenden Rad drehfest ist; und
- einen Untersetzungs-Planetengethebe-Mechanismus (20-24), der zwischen dem Achsschenkel (7) und dem Drehteil der Nabe (4) eingepaßt ist, wobei der Untersetzungs-Planetengetriebe-Mechanismus ein Sonnenrad (20), ein Hohlrad (21) und einen Planetenradträger (24) enthält, wobei das Sonnenrad (20) in einer Antriebsverbindung mit dem Hohlrad (21) ist, der Planetenradträger (24) nicht drehbar an dem stationären Teil (8) der korrespondierenden Radnabe (4)befestigt ist, in dem Planetenradträger (24) wenigstens eine Leitung (34,35) eines Bremskreises des Fahrzeugs vorgesehen ist,
dadurch **gekennzeichnet**,
daß die Leitung (34,35) durch eine Wand (25) des Planetenradträgers (24) axial entfernt von dem Träger (2) offen ist, wobei die Wand (25) des Planetenradträgers (24) so ausgebildet ist, daß entfernbar mit ihr entweder ein Verschluß (32) zum Schließen der Leitung (34,35) oder ein stationärer Teil (37) einer Bremse (36) verbunden ist, wobei die Bremse eine hydraulische Bremsbetätigung (43,44) besitzt, welche hydraulisch mit der wenigstens einen Leitung (34,35) verbunden ist, wenn die Bremse an dem Planetenradträgerwand (25) befestigt ist.

2. Welle gemäß Anspruch 1, bei der die Bremse (36) eine Scheibe (39) und ein Gegenscheiben-Paket (40) aufweist, wobei eines davon drehfest mit einem glockenförmigen Teil des stationären Teils der Bremse (37) ist und das andere davon drehfest mit dem Sonnenrad (20) des Untersetzungsgetriebe-Mechanismus ist, wobei das glockenförmige Teil (37) in Kombination mit der Betätigung (43) und der Scheibe (39) und dem Gegenscheiben-Paket (40) eine individuell handhabbare dem Getriebe-Träger (24) zugeordnete Einheit bildet.

3. Welle gemäß Anspruch 1 oder 2, bei der der Planetenradträger (24) mehrere Säulen-Formationen (27) aufweist, die sich zwischen entsprechenden Wänden des stationären Teils (8) der Nabe erstrecken, wobei die Leitung (34,35) sich durch die Säulenformationen (27) erstreckt.

4. Welle gemäß Anspruch 2, bei der die Elemente des Pakets (39), welche drehfest mit dem Sonnenrad sind, mittels einem Rohr (41) drehfest gemacht sind, welches lösbar drehfest mit dem Sonnenrad (20) an dessen freiem Ende gemacht ist.

5. Welle gemäß einem oder mehrerer der vorhergehenden Ansprüche, bei der zwischen dem Sonnenrad (20) und dem korrespondierenden Achsschenkel (7) eine Kupplungseinrichtung (52,53) vorgesehen ist, die derart ausgebildet ist, daß sie selektiv den Untersetzungsgetriebe-Mechanismus mit dem Achsschenkel (7) in Antriebsverbindung bringt bzw. davon löst.

6. Welle gemäß Anspruch 5, bei der die Kupplungseinrichtung ein erstes und ein zweites Kupplungsteil (54,53) an den gegenüberliegenden Enden des Achsschenkels (7) und des Sonnenrads (51) und einen Betätiger (54) aufweist, der auf das Sonnenrad (51) wirkt, um es axial innerhalb des Untersetzungsgetriebe-Mechanismus in einen und aus einem eingekuppelten Zustand der Teile zu verschieben.

7. Welle gemäß Anspruch 6, bei der der Betätiger (54) auf das Sonnenrad (51) durch wenigstens ein elastisches Element (60,61) wirkt, um das Sonnenrad (51) elastisch in den und aus dem eingekuppelten Zustand zwangszubewegen.

8. Welle gemäß einem oder mehreren der vorhergehenden Ansprüche, bei der der drehbare Teil (9) eine einheitliche Ausbildung besitzt, welche eine Vorrichtung zum Verbinden mit dem korresponierenden Rad und dem Hohlrad (21) des Untersetzungs-Planetengetriebe-Mechanismus beinhaltet.

9. Welle gemäß Anspruch 8, bei welcher entsprechende Spuren (10a,b) für Lager (10) zum Stützen des drehbaren Teils (9) auf dem stationären Teil (8) in der einheitlichen Ausbildung des drehbaren Teils (9) vorgesehen sind.

## Revendications

1. Essieu moteur pour véhicule, en particulier pour tracteur agricole, comprenant une poutre (2) ayant un moyeu correspondant (4) de roue monté aux extrémités opposées, chaque moyeu de roue (4) étant associé à un arbre rectiligne respectif (7) et comprenant :
- une partie fixe (8) fixée à la poutre (2), et une partie (9) qui peut tourner par rapport à la partie fixe (8) et qui tourne en coopération avec la roue correspondante, et
- un mécanisme épicycloïdal (20-24) de réduction de vitesse destiné à être monté entre l'arbre rectiligne (7) et la partie rotative du moyeu (4), le mécanisme réducteur de vitesse comprenant un pignon solaire (20) , une couronne dentée (21) et un porte-satellites (24), le pignon solaire (20) étant en prise avec la couronne dentée (21), le porte-satellites (24) étant fixé à la partie fixe (8) du moyeu (4) de la roue correspondante de manière qu'il ne puisse pas tourner, le porte-satellites (24) ayant au moins un conduit (34, 35) de circuit de freinage du véhicule, l'essieu étant caractérisé en ce que le conduit (34, 35) débouche par une paroi (25) du porte-satellites (24) distante axialement de la poutre (2), la paroi (25) du porte-satellites (24) étant destinée à assurer le raccordement temporaire soit d'un organe de fermeture (32) du conduit (34, 35), soit d'une partie fixe (37) d'un frein (36), le frein ayant un organe hydraulique de manoeuvre (43, 44) qui est relié hydrauliquement audit conduit au moins (34, 35) lorsque le frein est monté sur la paroi (25) du porte-satellites.

2. Essieu selon la revendication 1, dans lequel le frein (36) comporte un ensemble à disques (39) et disques auxiliaires (40), des disques étant solidaires afin qu'ils tournent en rotation avec la pièce en cloche de la partie fixe du frein (37) et les autres disques étant solidaires afin qu'ils tournent avec le pignon solaire (20) du mécanisme réducteur de vitesse, la pièce en cloche (37) formant, en combinaison avec l'organe de manoeuvre (43) et l'ensemble des disques (39) et disques auxiliaires (40), un ensemble manipulé individuellement, associé au porte-satellites (24).

3. Essieu selon la revendication 1 ou 2, dans lequel le porte-satellites (24) comprend plusieurs montants (27) disposés entre les parois respectives de la partie fixe (8) du moyeu, le conduit (34, 35) étant disposé dans les montants (27).

4. Essieu selon la revendication 2, dans lequel les disques de l'ensemble (39) qui tournent solidairement avec le pignon solaire tournent solidairement avec le manchon (41) qui est rendu temporairement solidaire en rotation du pignon solaire (20), à une extrémité libre du manchon.

5. Essieu selon une ou plusieurs des revendications précédentes, dans lequel un dispositif d'embrayage (52, 53) destiné à être commandé sélectivement afin qu'il raccorde ou sépare le mécanisme de réduction de vitesse de l'arbre rectiligne (7) est placé entre le pignon solaire (20) et l'arbre rectiligne correspondant (7).

6. Essieu selon la revendication 5, dans lequel le dispositif d'embrayage comprend un premier et un second organe (54, 53) d'embrayage sur les extrémités en regard de l'arbre rectiligne (7) et du pignon solaire (51), et un organe de manoeuvre (54) agissant sur le pignon solaire (51) afin qu'il déplace celui-ci axialement dans le mécanisme réducteur de vitesse et qu'il assure la coopération des organes d'embrayage ou les sépare.

7. Essieu selon la revendication 6, dans lequel l'organe de manoeuvre (54) agit sur le pignon solaire (51) par l'intermédiaire d'au moins un élément élastique (60, 61) qui rappelle élastiquement le pignon solaire (51) dans la position embrayée ou en dehors de celle-ci.

8. Essieu selon une ou plusieurs des revendications précédentes, dans lequel la partie rotative (9) a une structure unitaire comprenant un dispositif de raccordement à la roue correspondante et à la couronne dentée (21) du mécanisme épicycloïdal de réduction de vitesse.

9. Essieu selon la revendication 8, dans lequel des voies respectives (10a, 10b) de roulement (10) destinées à supporter la partie rotative (9) sur la partie fixe (8) sont obtenues dans la structure unitaire de la partie rotative (9).
